# EUROPEAN PATENT SPECIFICATION

(11) **EP 0 433 722 B1**
(45) Date of publication and mention of the grant of the patent: **12.07.1995**
(21) Application number: 90122784.3
(22) Date of filing: 28.11.1990
(51) Int. Cl.: B23Q 1/25, B23Q 39/04, B23B 9/04

(54) **Multi spindle automatic lathe**
Mehrspindel-Drehautomat
Tour automatique à broches multiples

(30) Priority: 20.12.1989 JP 328314/89; 27.07.1990 JP 197795/90
(43) Date of publication of application: 26.06.1991
(73) Proprietor: MITSUBISHI JUKOGYO KABUSHIKI KAISHA, Tokyo 100 (JP)
(72) Inventor: Mukai, Yuuichi, c/o Hiroshima Machine Tool Works, Asaminami-ku, Hiroshima, Hiroshima Pref. (JP)
(74) Representative: Kern, Wolfgang, Dipl.-Ing.

(56) References cited:
- EP-A- 0 113 997
- EP-A- 0 242 870
- WO-A-84/00909
- US-A- 3 404 589

## Description

The present invention relates to a multi-spindle automatic lathe adapted to continuously process a plurality of works while causing the works to be rotated in an indexing fashion, particularly for the purpose of improving the processing efficiency and reducing the overall dimensions of the lathe.

In a continuous processing operation for the rod-like works while a plurality of tools are being exchanged one after another, a multi-spindle automatic lathe has been used, wherein the lathe comprises a spindle carrier, mounted so as to be freely rotatable in an indexing fashion relative to a head stock, and a plurality of spindles, each of which is mounted to be freely rotatable about the indexing rotation center of the spindle carrier and having a work loaded thereon respectively.

That is, each of the said works is loaded on the respective spindle of the multi-spindle lathe and is processed simultaneously in each of the work stations, provided in the corresponding number to the number of spindles. Upon the processing operation for the work being completed at each of the stations, the spindle carrier is caused to rotate in an indexing fashion so that each of the works may be processed sequentially at a plurality of work stations.

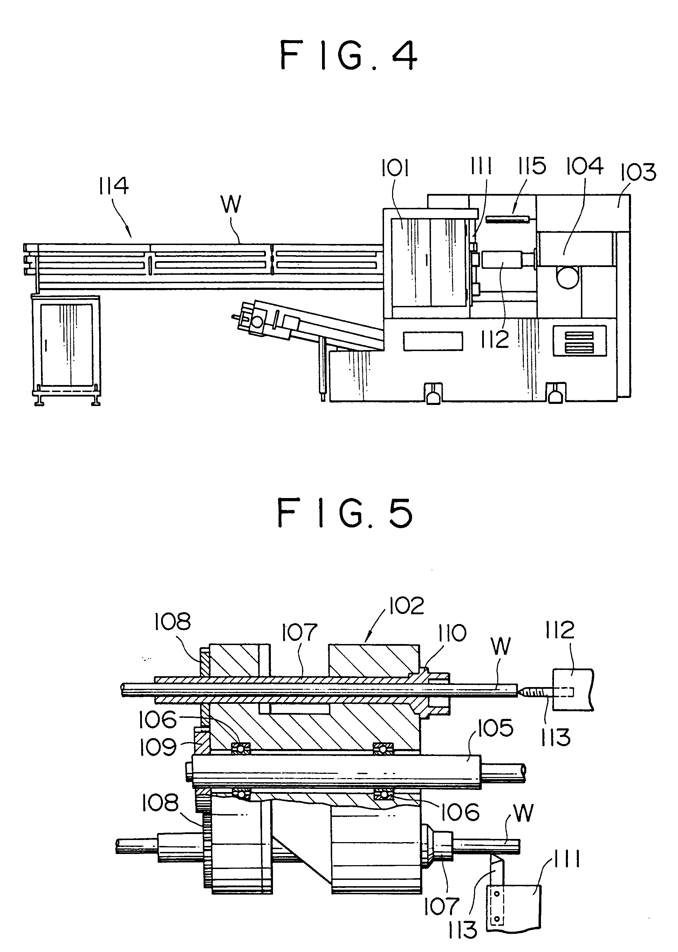

The construction of such a multi-spindle automatic lathe in the prior art will be described in detail hereinbelow, with reference to Fig. 4 which illustrates the conception of such an automatic lathe and Fig. 5 which illustrates its spindle carrier in a cut-away view.

Illustrated in these drawings are a head stock 101 for the multi-spindle automatic lathe and a spindle carrier 102 which is mounted to be freely rotatable in an indexing fashion relative to the head stock 101. A driving shaft 105 extends through the center of the spindle carrier 102 via bearings 106 to be freely rotatable relative to the head stock 101 and the spindle carrier 102. The above-described driving shaft 105 is coupled with a driving motor (not shown) via a reduction gear 104 which is incorporated in a column 103.

The above-described spindle carrier 102 is provided with a plurality of hollow spindles 107 each of which surrounds and is arranged to be parallel with the driving shaft 105.

A spacing between the driving shaft 105 and each of spindles 107 is designed to be equal with a spacing between each of adjacent spindles 107, and the rotary indexing angle of the spindle carrier 102 for every run is designed to correspond with the number of the spindle 107 to be mounted on the spindle carriers 102.

Fixed at the rear end of the driving shaft 105 is a driving gear 109 which may simultaneously engage a follower gear 108 fixed at the rear end of each of the spindles 107, and all of the spindles 107 are made to be rotatable in the same direction as the driving shaft 105 is driven to rotate.

Additionally, a circular rod-like work W which penetrates through each of the spindles 107 and has its distal portion to be processed extended beyond the tip end of the spindle 107 is supported in position on the spindle 107 by means of a collet 110 attached to the spindle 107 respectively.

In each of the work stations of the number corresponding to the number of the spindles 107 to be attached, there are arranged a cross tool slide 111 movable in a direction (i.e., in an upper and downward direction in Fig.4) in which it may intersect with the driving shaft 105, and an end tool slide 112 shiftable in a direction parallel with the driving shaft 105 (i.e., in a lateral direction in Fig. 4). These slides 111 and 112 are selectively arranged in accordance with the feeding direction of the processing tool 113 loaded on these slides for the lathe turning operation.

The cross tool slide 111 is attached to the side of the head stock 101, whereas the end tool slide 112 is attached to the side of the column 103 against which the head stock 101 opposes.

The processing tools 113 loaded on these tools slides are used in the lathe-turning, milling or drilling and thread-forming operations and the like to be performed for the works, and a cutter is shown as loaded on the cross tool slide 111 in the illustrated embodiment, whereas a rotary tool such as a drill and the like is shown as loaded on the end tool slide 112.

In the multi spindle automatic lathe constituted as above, a work W is previously contained on a stock reel 114 provided in the rearward (in the left-ward direction in Fig. 5) of the multi spindle automatic lathe, and then the work W is caused to penetrate through the spindle 107 freely rotatably attached on the spindle carrier 102 and project into a tooling zone 115 defined between the head stock 101 and the column 103. The work W is subject to various machining operations whenever the spindle carrier 102 makes a rotary indexing movement.

In the traditional multi spindle automatic lathe of the type as described and illustrated in Fig. 4 and 5, while the cross tool slide 111 movable in the direction in which it may intersect with the axis of the spindle 107 is mounted on the side of the head stock, the end tool slide 112 shiftable in a direction in parallel with the axis of the spindle 107 is arranged at the side of the column against which the head stock 101 opposes with the tooling zone sandwiched therebetween.

Consequently, an operator has to frequently access the multi-spindle automatic lathe from its front or back portions to replace the processing tool 113 when it is required to load or unload the processing tool 113 relative to each of the tool slides 111 and 112. This means the occurence of a problem that an operating efficiency is significantly reduced.

Moreover, because a separate feed driving mechanism is provided for each of tool slides 111 and 112 independently on the head stock 101 and the column 103, there is another problem that the entire lathe is enlarged in dimensions, and furthermore each of the tool slides 111 and 112 can merely move in a single direction with a result that the processing freedom of the lathe is limited.

Thus, for the multi-spindle automatic lathe having a plurality of spindles which are parallel with each other, it has been desirable that each of the tool slides and a feed driving mechanism, which affords a feeding movement to the tool slides, are designed to be as compact as possible in order to facilitate the exchange of the processing tools and ensure a smooth removal of chips.

In particular, there is a desperate need for a tool slide and driving mechanism with a compact construction for the traditional multi-spindle automatic lathe wherein respective tool slides must be arranged to a plurality of spindles each of which is arranged in an annular configuration, because such a lathe inherently does not allow an ample operating space.

A multi-spindle automatic lathe according to the preamble of claim 1 is known from US-A-3 404 589. This document discloses a machine tool comprising a housing for the spindle carrier. At the top of the housing is a support for the upper cross and end working slides. On the front end of the machine tool another housing is arranged for the lower cross and end working slides. Each tool slide is provided on a support which represents a further element at the lathe body. Some tool slides are located on the opposite side of the head stock, other tool slides need a separate support extending in a horizontal manner away from the head stock. The overall dimensions of this known lathe are considerable and the access to the tooling zone is rendered difficult.

It is an object of the present invention to provide a compact multi-spindle automatic lathe, the operating efficiency of which is improved and the overall dimensions of which are reduced.

This object is achieved by a multi-spindle automatic lathe comprising the features of claim 1.

Further aspects are mentioned in the subclaims.

The invention will be described in detail on the basis of the drawings showing one embodiment of the present invention.
- Fig. 1: is a lateral side view illustrating the general configuration of the multi-spindle automatic lathe;
- Fig. 2: is a front elevation of a portion of the head stock of the automatic lathe;
- Fig. 3: is a cross-sectional view along the line III-III;
- Fig. 4: is a lateral side view illustrating the general construction of a known multi-spindle automatic lathe; and
- Fig. 5: is a cut-away view illustrating the general construction of a portion of the spindle carrier of the automatic lathe of Fig. 4.

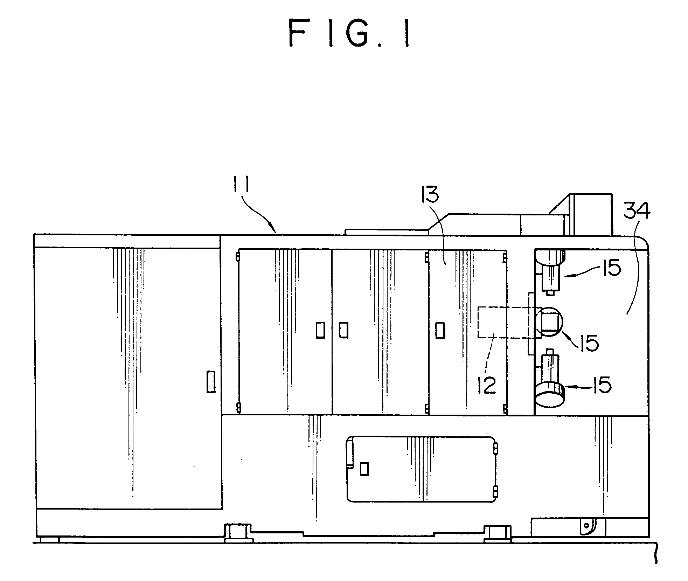

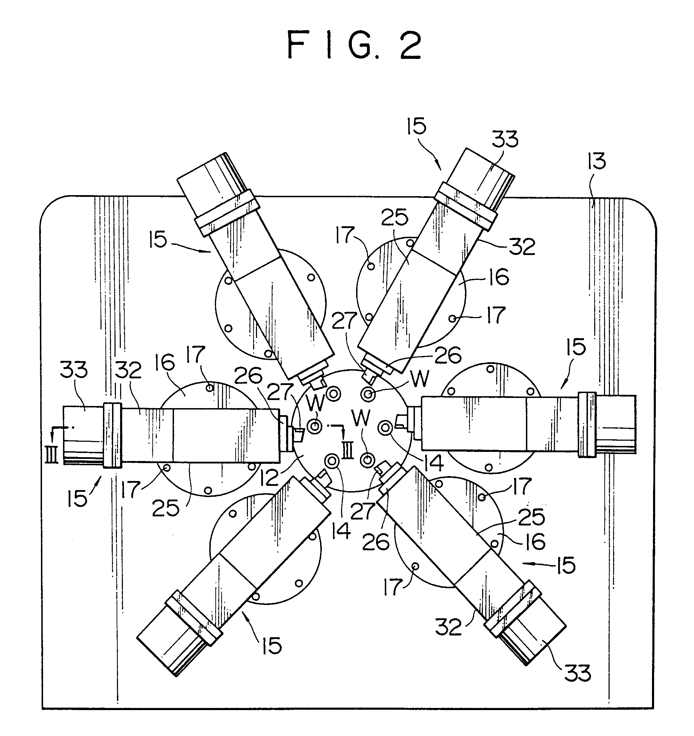

The multi-spindle automatic lathe in accordance with the present invention will be described in detail hereinbelow, with reference to Fig. 1 and Fig. 2, wherein one embodiment of the multi-spindle automatic lathe is illustrated as embodied as a six-spindles automatic lathe and being used to process a circular rod-like material. Fig. 1 illustrates a general configuration of the automatic lathe, whereas Fig. 2 illustrates a front configuration of the head stock of the lathe.

This automatic lathe body 11 is provided at its front portion with the head stock 13 which supports the spindle carrier 12 to be freely rotatable in an indexing fashion. The above-described spindle carrier 12 is provided with six spindles each of which is arranged with an equal spacing relative to an adjacent one in an annular configuration, each of these spindles being drivably rotatable. The circular rod-like work W is held on each of these spindles 14. In the meantime, the essential construction of this portion is identical with that of the traditional lathe as shown in Fig. 5. Arranged around the spindle carrier 12 are six tool slides 15, the number of which is selected depending on the number of spindles 14, and each of which is attached on the head stock 13.

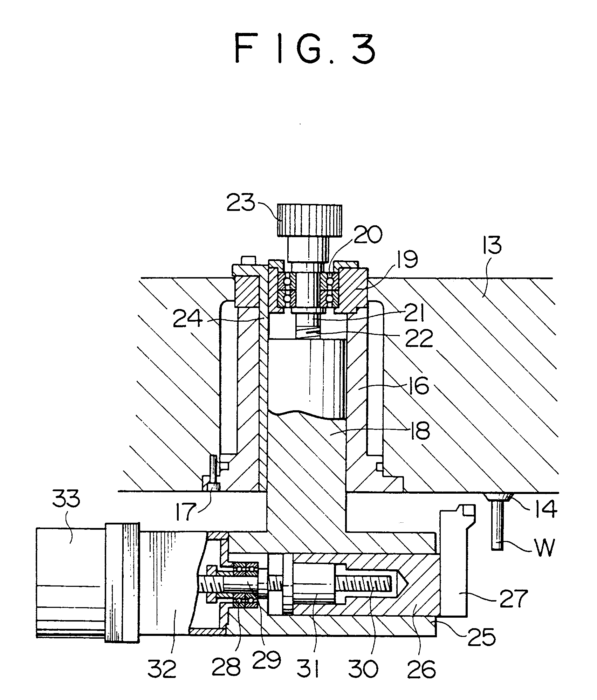

As illustrated in Fig. 2 and Fig. 3 which shows a cross-sectional view along the line III-III in Fig. 2, the head stock 13 which is arranged around the spindle carrier 12 is provided with a sliding guide cylinder 16 which forms a rectangular cylindrical-shape and is fixed in position via bolts 17. A sliding shaft 18 of rectangular cross-section is freely slidably engaged with each of the sliding guide cylinders 16. Threadably engaged with the rear end portion of the each of the sliding shafts which positions in the head stock 13 is the male thread portion 22 of a first threaded shaft 21 supported in position to be freely rotatable relative to the head stock 13 by means of bearing 20 via a bearing block 19. By reversibly rotating a feed gear 23 provided on the rear end of the first threaded shaft 21 by means of a first driving motor (not shown) via power transmission means (not shown), all sliding shafts 18 may be shifted simultaneously in the vertical direction in Fig. 3.

Meanwhile, in this embodiment, a wedge-like gib 24 is provided in a clearance between the sliding guide cylinder 16 and the sliding shaft 18, the gib 24 serving to adjust the fitting clearance of the sliding shaft 18 relative to the sliding guide cylinder 16.

A rectangular cylindrical-shaped tool holder guide cylinder 25 which extends in a direction normal to a direction in which these sliding shafts slide is formed at the distal end side of the sliding shaft 18 integrally with the sliding shaft 18.

A tool holder 26 of rectangular cross-section engages the spindle 14 side of one tool holder guide cylinder 25 to be freely slidable, and a processing tool 27, such as a cutter and the like, which performs a predetermined operation against the works W supported on the spindle 14 respectively is exchangeably loaded on the distal portion of the each of the tool holders 26.

In the meantime, in the case that the processing tool 27 used is a rotary tool such as a drill and the like, it may be more convenient to use tool holder of the type incorporating a driving motor and couple the rotary tool with the driving motor of this tool holder.

Secured on the proximal end portion of the tool holder 26 which is positioned in the above-described tool holder guide cylinder 25 is a nut 31 which may threadably engage with a male thread portion 30 formed on the distal end side of a second threaded shaft 29 which is in turn freely rotatably supported in the tool holder guide cylinder 25 via bearings 28. Coupled with each of these second threaded shafts 29 at its proximal end portion is a second driving motor 32 which is in turn attached on the end of the tool holder guide cylinder 25 which opposes against the processing tool 27. By actuating these second driving motors 32 to reversibly rotate the second threaded shaft 29, the tool holder 26 can be fed and shifted in the lateral directions in Fig. 3 together with the processing tool 27.

Meanwhile, in this embodiment, these second driving motors 32 are provided with a pulse-coder 33 respectively to detect a rotary phase and the number of rotations of the second threaded shaft 29, so that a position of the processing tool 27 relative to the work W may be detected.

In accordance with the multi-cylinder automatic lathe of the present invention which is constructed as described above, as the spindle carrier 12 rotates in an indexing fashion, each of the works W held on a spindle 14 of the spindle carrier 12 is positioned in the work station which is aligned with the processing tool 27 of a tool slide 15.

The work W is thus drivably rotated together with the spindle 14 by means of driving means (not shown) incorporated in the automatic lathe 11.

By actuating either the first driving motor (not shown) of each of the tool slides 15 or the second driving motor 32, the processing tool 27 loaded on the tool holder 26 of the tool slide 15 is caused to shift in a direction parallel with the axis of the spindle 14 or in a direction normal with the axis in order to perform a predetermined processing operation against the work W.

In this way, the tool holder 26 of each of the tool slides 15 can be shifted in a dual direction respectively, and consequently the lathe may permit all tool slides 15 to have more freedom during a processing operation than in the traditional device. Moreover, all of these tool slides 15 are arranged at the head stock 13 side, and thus it is possible for the traditional multi-spindle automatic lathe as shown in Fig. 4 to omit the column and the gear box etc., which would otherwise be positioned to oppose the head stock, whereby realizing a remarkable reduction in overall dimensions of the lathe. Furthermore, because the column and the gear box etc. need not be located in a position where they oppose the head stock, with the tooling zone 34 sandwiched therebetween, the tooling zone and hence the operator's working area can be increased, thereby substantially improving the operating efficiency over the prior automatic lathe.

## Claims

1. A multi-spindle automatic lathe, comprising a spindle carrier (12) disposed so as to rotate in an indexing fashion relative to a head stock (13),
a plurality of spindles (14) which are rotatably mounted on the spindle carrier (12) around the indexing center thereof and onto which a work (W) is mounted, and a plurality of tool slides (15) arranged around said spindle carrier (12) in a position corresponding to a spindle (14), each tool slide (15) supporting a tool (27) for machining said work (W) mounted on the respective spindle (14),
wherein the spindle carrier (12), each spindle (14) as well as the driving means for the spindle carrier (12) and for each spindle (14) are arranged within the head stock (13) the head stock (13),
**characterized** in that
each tool slide (15) comprises a sliding shaft (18) which is slidably arranged within said head stock (13) so as to axially project therefrom,
each tool slide further comprises a tool holder (26) which is slidably arranged at an end of the sliding shaft (18) in a crosswise direction with respect to the axis of the spindle (14),
such that each tool slide (15) is shiftable in a direction parallel to the axis of the spindle (14) by means of the sliding shaft (18) and also in a direction normal to the axis of the spindle (14) by means of the tool holder (26), and that the head stock (13) is located at the front portion of the lathe body (11).

2. The multi-spindle automatic lathe according to claim 1, **characterized** in that the head stock (13) is provided with a sliding guide cylinder (16), the sliding shaft (18) is freely slidable engaged therewith and that the sliding guide cylinder (16) and the sliding shaft (18) are of rectangular cross-section.

3. The multi-spindle automatic lathe according to claim 1 or 2, **characterized** in that the rear end portion of the sliding shaft (18) which is positioned in the head stock (13) is threadably engaged with the mail thread portion (22) of a first threaded shaft (21) supported in position to be freely rotatable relative to the head stock (13).

4. The multi-spindle automatic lathe according to one of the foregoing claims, **characterized** in that a tool holder guide cylinder (25) of rectangular cross-section extends normal to the axis of the spindle (14) and is formed at the distal end side of the sliding shalt (18) integrally therewith.

5. The multi-spindle automatic lathe according to claim 4, **characterized** in that a nut (31) is secured on the proximal end portion of the tool holder (26) which is positioned in the tool holder guide cylinder (25), said nut (31) being threadably engaged with a male thread portion (30) of a second threaded shaft (29) rotatably supported in the tool holder guide cylinder (25).

6. The multi-spindle automatic lathe at least according to claims 3 and 5, **characterized** in that the first threaded shaft (21) is reversibly rotatable by a first driving motor and the second threaded shalt (29) is reversibly rotatable by a second driving motor (32) which is attached on the end of the tool holder guide cylinder (25) and which is provided with a pulse-coder (33) to detect a rotary phase and the number of rotations of the second threaded shaft (29).

## Patentansprüche

1. Mehrspindel-Drehautomat umfassend:
einen Spindelträger (12), welcher derart angeordnet ist, daß er sich relativ zu einem Spindelstock (13) absatzweise dreht,
mehrere Spindeln (14), welche an dem Spindelträger (12) um dessen Zentrum für die absatzweise Bewegung herum drehbar angebracht sind und an welchen ein Werkstück (W) gehalten ist, und mehrere Werkzeugschlitten (15), die um den Spindelträger (12) herum in einer einer Spindel (14) entsprechenden Stellung angeordnet sind und ein Werkzeug (27) zum Bearbeiten des auf der jeweilgen Spindel (14) angebrachten Werkstücks (W) tragen,
wobei der Spindelträger (12), jede Spindel (14) sowie die Antriebseinrichtungen für den Spindelträger (12) und für jede Spindel (14) innerhalb des Spindelstocks (13) angeordnet sind,
**dadurch gekennzeichnet,**
daß jeder Werkzeugschlitten (15) eine Schiebewelle (18) aufweist, welche innerhalb des Spindelstocks (13) verschiebbar angeordnet ist und sich von dem Spindelstock in axialer Richtung erstreckt,
jeder Werkzeugschlitten ferner einen Werkzeughalter (26) aufweist, welcher an einem Ende der Schiebewelle (18) quer in bezug auf die Achse der Spindel (14) verschiebbar angeordnet ist,
so daß jeder Werkzeugschlitten (15) in einer Richtung parallel zur Achse der Spindel (14) mittels der Schiebewelle (18) und außerdem in einer Richtung senkrecht zur Achse der Spindel (14) mit Hilfe des Werkzeughalters (26) verschiebbar ist, und daß der Spindelstock (13) am Vorderabschnitt des Gehäuses (11) der Drehbank angeordnet ist.

2. Mehrspindel-Drehautomat nach Anspruch 1, **dadurch gekennzeichnet,** daß der Spindelstock (13) mit einem Schiebeführungszylinder (16), mit dem die Schiebewelle (18) frei verschiebbar zusammenwirkt, versehen ist und daß der Schiebeführungszylinder (16) und die Schiebewelle (18) einen rechteckigen Querschnitt aufweisen.

3. Mehrspindel-Drehautomat nach Anspruch 1 oder 2, **dadurch gekennzeichnet,** daß der hintere Endabschnitt der Schiebewelle (18), welcher in dem Spindelstock (13) angeordnet ist, mit dem Außengewindeabschnitt (22) einer ersten Gewindewelle (21) in Eingriff steht, welche in ihrer Stellung in bezug auf den Spindelstock (13) frei drehbar gehalten ist.

4. Mehrspindel-Drehautomat nach einem der vorhergehenden Ansprüche, **dadurch gekennzeichnet**, daß ein Werkzeughalter-Führungszylinder (25) mit rechteckigem Querschnitt sich senkrecht zur Achse der Spindel (14) erstreckt und am distalen Ende der Schiebewelle (18), einstückig damit verbunden, ausgebildet ist.

5. Mehrspindel-Drehautomat nach Anspruch 4, **dadurch gekennzeichnet,** daß eine Mutter (31) am proximalen Endabschnitt des Werkzeughalters (26) befestigt ist, welcher in dem Werkzeughalter-Führungszylinder (25) angeordnet ist, wobei die Mutter (31) mit einem Außengewindeabschnitt (30) einer zweiten Gewindewelle (29) in Eingriff steht, welche in dem Werkzeughalter-Führungszylinder (25) drehbar gelagert ist.

6. Mehrspindel-Drehautomat zumindest nach den Ansprüchen 3 und 5, **dadurch gekennzeichnet,** daß die erste Gewindewelle (21) durch einen ersten Antriebsmotor umschaltbar drehbar ist und die zweite Gewindewelle (29) durch einen zweiten Antriebsmotor (32) umschaltbar drehbar ist, welcher Antriebsmotor am Ende des Werkzeughalter-Führungszylinders (25) befestigt ist und welcher mit einem Impulskodierer (33) zum Ermitteln einer Drehphase und der Anzahl der Drehungen der zweiten Gewindewelle (29) versehen ist.

## Revendications

1. Tour automatique multi-broche, comprenant un porte-broche (12) disposé de façon à tourner d'une façon indexée par rapport à une poupée fixe (13),
une pluralité de broches (14) montées tournantes sur le porte-broche (12) autour du centre d'indexation de celui-ci et sur lesquelles est montée une pièce à usiner (W), et une pluralité de chariots outil mobiles (15) disposés autour dudit porte-broche (12) dans une position correspondant à une broche (14), chaque chariot outil mobile (15) supportant un outil (27) pour usiner ladite pièce à usiner (W) montée sur la broche respective (14),
dans lequel le porte-broche (12), chaque broche (14) ainsi que le moyen d'entraînement du porte-broche (12) et de chaque broche (14) sont disposés à l'intérieur de la poupée fixe,
caractérisé en ce que
chaque chariot outil mobile (15) comprend un arbre coulissant (18) qui est monté coulissant à l'intérieur de ladite poupée fixe (13) de façon à faire saillie axialement de celle-ci,
chaque chariot outil mobile comprend de plus un porte-outil (26) qui est monté coulissant à une extrémité de l'arbre coulissant (18) dans une direction transversale par rapport à l'axe de la broche (14),
de façon que chaque chariot outil mobile soit coulissant dans une direction parallèle à l'axe de la broche (14) au moyen de l'arbre coulissant (18) et aussi dans une direction normale à l'axe de la broche (14) au moyen du porte-outil (26), et
en ce que la poupée fixe (13) est située dans la partie frontale du corps de tour (11).

2. Tour automatique multi-broche selon la revendication 1, caractérisé en ce que la poupée fixe (13) est pourvue d'un cylindre de guidage coulissant (16), l'arbre coulissant (18) est en liaison à coulissement libre avec celui-ci, et en ce que le cylindre de guidage coulissant (16) et l'arbre coulissant (18) ont une section transversale rectangulaire.

3. Tour automatique multi-broche selon la revendication 1 ou 2, caractérisé en ce que la partie d'extrémité arrière de l'arbre coulissant (18) qui est positionnée dans la poupée fixe (13) est en liaison par filetage avec la partie de filetage mâle (22) d'un premier arbre fileté (21) supporté en position pour pouvoir tourner librement par rapport à la poupée fixe (13).

4. Tour automatique multi-broche selon l'une des revendications précédentes, caractérisé en ce qu'un cylindre de guidage de porte-outil (25) de section transversale rectangulaire s'étend perpendiculairement à l'axe de la broche (14) et est formé du côté de l'extrémité distale de l'arbre coulissant (18) intégralement avec celui-ci.

5. Tour automatique multi-broche selon la revendication 4, caractérisé en ce qu'un écrou (31) est fixé sur la partie d'extrémité proximale du porte-outil (26) qui est positionné dans le cylindre de guidage de porte-outil (25), ledit écrou (31) étant en liaison par filetage avec une partie filetée mâle (30) d'un second arbre fileté (29) supporté tournant dans le cylindre de guidage de porte-outil (25).

6. Tour automatique multi-broche selon au moins les revendications 3 et 5, caractérisé en ce que le premier arbre fileté (21) peut être mis en rotation de façon réversible par un premier moteur d'entraînement et le second arbre fileté (29) peut être mis en rotation de façon réversible par un second moteur d'entraînement (32) qui est fixé à l'extrémité du cylindre de guidage de porte-outil (25) et qui est pourvu d'un codeur d'impulsions (33) pour détecter un angle de rotation et le nombre de rotations du second arbre fileté (29).
